# EUROPÄISCHE PATENTSCHRIFT

(11) **EP 2 165 917 B1**
(45) Veröffentlichungstag und Bekanntmachung des Hinweises auf die Patenterteilung: **29.02.2012**
(21) Anmeldenummer: 09090015.0
(22) Anmeldetag: 17.09.2009
(51) Int. Cl.: B62D 1/26

(54) **Spurführungssystem**
Guidance system
Système de guidage de voie

(30) Priorität: 22.09.2008 DE 102008048827
(43) Veröffentlichungstag der Anmeldung: 24.03.2010
(73) Patentinhaber: Bombardier Transportation GmbH, 10785 Berlin (DE)
(72) Erfinder: Klaiber, Wolfram, 69469 Weinheim (DE); Bernd, Markus, 69509 Mörlenbach (DE)
(74) Vertreter: Patentanwälte Bressel und Partner

(56) Entgegenhaltungen:
- EP-A1- 0 290 022
- EP-A1- 1 352 777
- GB-A- 437 037

## Beschreibung

Die Erfindung betrifft ein Spurführungssystem zur Führung eines Fahrzeugs auf einer vorgegebenen Fahrspur, insbesondere zur Führung eines Trolleybusses für den öffentlichen Personenverkehr. Die Erfindung betrifft ferner ein Verfahren zur Führung eines Fahrzeugs auf einer vorgegebenen Fahrspur, insbesondere eines Trolleybusses. Allgemeiner formuliert betrifft die Erfindung vorzugsweise Landfahrzeuge und spezieller zum Beispiel Fahrzeuge, die auf öffentlichen Straßen betrieben werden können.

Im Gegensatz zu Schienenfahrzeugen, die durch die Schienen auf der Fahrspur gehalten werden, fahren Straßenfahrzeuge üblicherweise auf gummibereiften Rädern. Zur Führung von Bussen auf öffentlichen Straßen, aber auch auf speziell für Busse oder andere Landfahrzeuge reservierten Fahrwegen sind bereits optische Spurführungssysteme, schienengebundene Spurführungssysteme, induktive Spurführungssysteme und auf Satellitennavigation beruhende Spurführungssysteme vorgeschlagen worden.

Optische Spurführungssysteme haben zwar den Vorteil, dass die Investitionskosten für die Realisierung einer optischen Leitspur auf dem Fahrweg relativ gering sind. Allerdings kann es in unterschiedlichen Situationen vorkommen, dass die Leitspur nicht erkennbar ist. Zum Beispiel kann die Leitspur durch andere Fahrzeuge verstellt sein oder von Hindernissen anderer Art überdeckt sein. Auch Witterungseinflüsse wie Nebel, Schnee und Glatteis auf dem Fahrweg können die Nutzung der optischen Leitspur beeinträchtigen oder verhindern.

Wird eine Schiene oder ein Schienenpaar zur Spurführung installiert, sind die Investitionskosten und der Zeitaufwand dagegen hoch. Wenn nicht derselbe Aufwand wie bei üblichen Zwei-Schienen-Fahrzeugsystemen betrieben wird, besteht Entgleisungsgefahr bzw. die Gefahr, dass das Fahrzeug den Kontakt zu der Schiene oder den Schienen verliert und nicht mehr sicher geführt wird. Insbesondere in diesem Fall verschlechtern auch die oben bereits genannten Witterungseinflüsse die Zuverlässigkeit der Spurführung.

Bei induktiven Spurführungssystemen dienen elektromagnetische Felder, die auf Fahrzeugseite mit Hilfe von zumindest einer Induktionsspule empfangen werden, der automatischen Spurführung. Die entsprechenden Investitionskosten sind hoch. Außerdem können die elektromagnetischen Felder gestört werden, so dass die Spurführung unter Urnständen nicht mehr gewährleistet ist. Störende Einflüsse können beispielsweise von in die Fahrwege integrierten induktionsschleifen für andere Zwecke, zum Beispiel für Verkehrsleitanlagen sowie von in den Fahrwegen vorhandenen magnetisierbaren Gegenständen, wie Kanalisationsabdeckungen, ausgehen. Auch andere Einrichtungen an Bord des Fahrzeugs konnen die elektromagnetischen Felder, deren Empfang und deren Auswertung stören.

Bei einer Spurführung auf Basis von Satellitennavigation, zum Beispiel GPS, ist die Verfügbarkeit der Satellitensignale, (zum Beispiel in Tunneln, aber auch bei bestimmten Geländeformationen sowie von der Verkehrssituation abhängig) nicht gewährleistet. Auch ist die Präzision der Spurführung in diesen Fall gering oder muss mit sehr hohem Aufwand verbessert werden. Um ein zuverlässiges System zu gewährleisten, sind die Investitionskosten ebenfalls sehr hoch.

GB 437,037 beschreibt ein Verfahren zum Steuern von Motorfahrzeugen. Ein Führungselement ist entlang der Straße verlegt und wird von einer Messanordnung des Fahrzeugs abgetastet. Die Einstellung dieser Anordnung entsprechend dem Abstand von dem Führungselement dient dazu, einen Servomotor zu steuern, der die Steuerräder des Fahrzeugs betätigt. Im Fall eines Trolley-Busses kann das seitliche Ausschwingen des Stromabnehmers ausgestaltet werden, ein oder mehrere Relais zu steuern, die das Steuern des Fahrzeugs durch einen Servomotor beeinflussen. Durch den Winkel einer Abweichung zwischen dem Stromabnehmer-Schaft und der Längsachse des Fahrzeugs und dem Winkel zwischen dem Stromabnehmer-Schaft und dem Auseger (?) werden ein oder mehrer Relais gesteuert, die die Straßen-Steuerräder des Fahrzeugs veranlassen, abgelenkt werden, unter Nutzung des Servomotors.

EP 0290022 A1 beschreibt ein unbemanntes Untergrund-Fahrzeug und ein System zum Führen solch eines Fahrzeugs, das eine auf dem Dach montierte Führungsschiene aufweist Physikalische Mittel sind ausgestattet, veränderungen des Winkels und des Abstandes der zentralen Linie des Fahrzeugs von dem idealen Weg auf der Führungsschiene zu detektieren und zu berechnen. Mittel an Bord des Fahrzeugs stellen Steuerkommandos bereit und führen diese aus, um die Position des Fahrzeugs im Verhältnis zu der Führungsschiene zu korrigieren.

Es ist eine Aufgabe der vorliegenden Erfindung, ein Spurführungssystem und ein Verfahren zur Führung eines Fahrzeugs auf einer vorgegebenen Fahrspur anzugeben, die eine zuverlässige Spurführung bei geringem Aufwand für die Realisierung der Spurführung ermöglichen.

Die beigefügten Ansprüche definieren den Schutzumfang.

Es wird vorgeschlagen, einen Stromabnehmer, der an dem Fahrzeug angeordnet ist und dazu dient, elektrische Energie aus einer entlang der vorgegebenen Fahrspur verlaufenden Stromleitung für den Antrieb und/oder für Hilfsbetriebe des Fahrzeugs bereit zu stellen, für die Spurführung zu nutzen. Insbesondere wird der Stromabnehmer dadurch genutzt, dass eine Relativposition und/oder ein relativ zwischen dem Stromabnehmer und dem Fahrzeug zurückgelegter Weg aufgrund einer Relativbewegung von Stromabnehmer und Fahrzeug delektiert wird. Die Information über diese Relativposition und/oder den zurückgelegten Weg wird ausgewertet und davon abhängig wird das Fahrzeug so gelenkt, dass es auf der vorgegebenen Fahrspur fährt.

Anders als es bei klassischen Zwei-Schienen-Systemen (zum Beispiel bei Straßenbahnen) der Fall ist, kann die Fahrspur eine seitliche Toleranz für die Fahrt des Fahrzeugs auf der Fahrspur erlauben. So kann das Fahrzeug beispielsweise in der Mitte der Fahrspur oder weiter rechts oder links auf der Fahrspur fahren. Diese laterale Position kann sich beim Fahren auf der Fahrspur verändern. Insbesondere ist es auch möglich, dass die Fahrspur keine unveränderlich festgelegte Begrenzung hat. Zum Beispiel bei Trolleybussen kann die Fahrspur lediglich dadurch begrenzt sein, dass der Stromabnehmer an jeder beliebigen lateralen Position des Fahrzeugs in der Lage ist, Strom aus der Stromleitung zu dem Fahrzeug zu leiten. Es können jedoch auch engere Grenzen für die Fahrspur definiert sein. So kann zum Beispiel vorgegeben sein, dass ein definierter Punkt (beispielsweise in der Mitte des Fahrzeugs) in lateraler Richtung nicht weiter als eine vorgegebene maximale Entfernung von der Stromleitung fahren darf. Zum Beispiel wenn die Stromleitung über oder unter dem Fahrzeug verläuft, kann eine solche maximale Entfernung auch beidseits der Stromleitung definiert sein. Es kann aber erlaubt sein, dass das Fahrzeug temporär, das heißt vorübergehend, von der Fahrspur abweicht. Zum Beispiel bei Trolleybussen könnte die Fahrspur durch ein abgestelltes Kraftfahrzeug blockiert sein. In diesem Fall könnte der Fahrer das Hindernis auf eigene Verantwortung umfahren und dabei die Fahrspur zumindest teilweise oder ganz verlassen.

Grundsätzlich kann die Erfindung alternativ wie folgt beschrieben werden:
An dem Fahrzeug ist zumindest ein relativ zu dem Fahrzeug beweglicher Stromabnehmer angeordnet. Dabei ist es auch denkbar, dass das Gewicht des Stromabnehmers zumindest teilweise nicht vom Fahrzeug, sondern von der Stromleitung oder anderen, entlang der Strecke angeordneten Einrichtungen getragen wird. In der Regel wird aber, wie es üblicherweise bei Trolleybussen der Fall ist, das Gewicht des Stromabnehmers zumindest weitestgehend vom Fahrzeug getragen. Der Stromabnehmer ist relativ zu dem Fahrzeug beweglich. Dabei kann es sich um eine lineare und/oder Drehbeweglichkeit handeln. Zumindest während der Zeitspannen, in denen der Stromabnehmer elektrischen Strom aus der Stromleitung zu dem Fahrzeug überträgt, besteht eine Verbindung zwischen dem Fahrzeug und der Stromleitung. Diese Verbindung wird in der Regel eine mechanische Verbindung sein, wobei zumindest an einem Ende des Stromabnehmers lediglich ein schleifender elektrischer Kontakt (das heißt in der Regel zwischen Stromabnehmer und Stromleitung) vorhanden ist. Denkbar ist aber auch, statt einem schleifenden elektrischen Kontakt eine induktive Übertragung von elektrischer Energie zwischen Stromleitung und Stromabnehmer und/oder zwischen Stromabnehmer und Fahrzeug.
In jedem Fall aber ist aus der momentanen Relativposition zwischen Stromabnehmer und Fahrzeug die Information ableitbar, wie Stromleitung und Fahrzeug momentan relativ zueinander positioniert sind, da eine Verbindung von der Stromleitung über den Stromabnehmer zu dem Fahrzeug besteht. Optional kann dabei auch eine etwaig vorhandene Toleranz der Verbindung (zum Beispiel wenn elastische Bauteile an der Verbindung beteiligt sind) und/oder eine Biegung der Stromleitung, des Stromabnehmers und/oder von Teilen des Fahrzeugs berücksichtigt werden. Zum Beispiel sind Stromabnehmer von Trolleybussen üblicherweise elastisch blegbar. Welche der Frelheitsgrade der Bewegung des Stromabnehmers (einschließlich der etwaig vorhandenen Biegung) bei der Bestimmung der Relativposition von Stromabnehmer und Fahrzeug für die Lenkung des Fahrzeugs berücksichtigt werden, hängt von der konkreten Ausgestaltung des Systems ab. Häufig wird eine Bestimmung der lateralen Position (das heißt der Position quer zum Verlauf der Fahrspur, das heißt quer zum Fahrweg des Fahrzeugs) ausreichen, um das Fahrzeug ausreichend genau auf der Fahrspur zu führen. Zum Beispiel kann ein um eine vertikale Drehachse verdrehbarer Stromabnehmer auf dem Dach des Fahrzeugs lediglich hinsichtlich seiner Drehstellung gemessen und ausgewertet werden (vorausgesetzt, die Länge des Stromabnehmers in lateraler Richtung ist mit hinreichender Genauigkeit konstant). Dies gilt insbesondere dann, wenn ein Fahrer des Fahrzeugs durch das Spurfühnrngssystem lediglich beim Lenken des Fahrzeugs unterstützt wird oder wenn der Fahrer zumindest den Lenkvorgang mit beeinflussen oder zeitweise übemehmen kann.

Wenn in dieser Beschreibung oder den beigefügten Ansprüchen von einem Positions- undloder Wegsensor die Rede ist, schließt dies auch Sensoren mit ein, deren primäre Messgröße weder eine Position, eine Relativposition oder ein zurückgelegter Weg ist, sondern eine Messgröße, aus der auf die Position, die Relativposition und/oder den zurückgelegten Weg geschlossen werden kann. Zum Beispiel kann der Beschleunigungssensorfest mit dem Stromabnehmer verbunden sein (zum Beispiel eine so genannte IMU, Inertial Measurement Unit) und misst die Beschleunigung des Sensors und damit die Beschleunigung des Stromabnehmers wiederholt. Durch Integration der Beschleunigung über die Zeit kann die Geschwindigkeit des Stromabnehmers berechnet werden. Durch erneute integration kann der vom Stromabnehmer zurückgelegte Weg ermittelt werden. Abhängig von dem verwendeten Beschleunigungssensor kann es dabei erforderlich sein, dass auch das Fahrzeug mit einem Beschleunigungssensor ausgerüstet ist, um die Relativbewegung oder Relativposition zwischen Fahrzeug und Stromabnehmer zu bestimmen. Dieser an einem Vergleichspunkt angeordnete zweite Beschleunigungssensor muss jedoch nicht vorhanden sein. Zum Beispiel kann der Vergleichspunkt auch ein anderer Punkt des Stromabnehmers sein. In diesem Fall kann zum Beispiel aus der momentanen absoluten Position (im Erdkoordinatensystem), aus der momentanen Ausrichtung des Stromabnehmers und mit Hilfe von Kenntnissen über die Art der Anbringung und Beweglichkeit des Stromabnehmers am Fahrzeug direkt die für die Spurführung erforderliche Information berechnet werden. Optional kann dabei auch die Ausrichtung des Fahrzeugs (zum Beispiel die Ausrichtung der In Fahrzeugfahrtrichtung nach vom weisenden Fahrzeuglängsrichtung) bestimmt und berücksichtigt werden.

Unter einem Positions- und/oder Wegsensor ist daher ein Sensor zu verstehen, dessen Messsignal von der Position und/oder dem Weg abhängt, so dass aus dem oder den von dem Sensor gelieferten Signalen die Position und/oder der Weg bestimmbar ist.

Insbesondere wird folgendes vorgeschlagen: Ein Spurführungssystem zur Führung eines Fahrzeugs auf einer vorgegebenen Fahrspur, insbesondere zur Führung eines Trolleybusses für den öffentlichen Personenverkehr, wobei das Fahrzeug einen Stromabnehmer aufweist, der relativ zu dem Fahrzeug beweglich ist und der dazu ausgestaltet ist, elektrische Energie aus einer Stromleitung, die entlang der vorgegebenen Fahrspur verläuft, für einen Antrieb und/oder für Hilfsbetriebe des Fahrzeugs bereitzustellen, wobei
- das System einen Positions- und/oder Wegsensor aufweist, der derart mit dem Fahrzeug und/oder mit dem Stromabnehmer kombiniert ist, dass der Sensor wiederholt eine Relativposition und/oder einen relativ zwischen dem Stromabnehmer und dem Fahrzeug zurückgelegten Weg detektiert und ein entsprechendes Detektionssignal erzeugt,
- der Sensor mit einer Lenksteuerung verbunden ist, die ausgestaltet ist, die Detektionssignale zu empfangen und das Fahrzeug abhängig von den Detektionssignalen so zu lenken, dass das Fahrzeug auf der vorgegebenen Fahrspur fährt.

Ferner wird vorgeschlagen: Ein Verfahren zur Führung eines Fahrzeugs auf einer vorgegebenen Fahrspur, insbesondere zur Führung eines Trolleybusses für den öffentlichen Personenverkehr, wobei ein Stromabnehmer des Fahrzeugs elektrische Energie aus einer Stromleitung, die entlang der vorgegebenen Fahrspur verläuft, für einen Antrieb und/oder für Hilfsbetriebe des Fahrzeugs bereitstellt und wobei der Stromabnehmer sich entsprechend der Fahrt des Fahrzeugs und entsprechend dem Verlauf der Stromleitung relativ zu dem Fahrzeug bewegt, wobei
- wiederholt eine Relativbewegung und/oder eine Relativposition des Fahrzeugs und eines Stromabnehmers gemessen wird/werden und
- das Fahrzeug abhängig von Messwerten der Messung so gelenkt wird, dass das Fahrzeug auf der vorgegebenen Fahrspur fährt.

Der Sensor Ist ein Beschleunigungssensor.

Nicht zum Umfang der Ansprüche gehören die in diesem Absatz folgenden Fälle: Der Sensor ist ein elektrischer und/oder pneumatischer Sensor. Dabei kann es sich z. B. um einen Wegaufnehmer handeln, der z. B. einen entsprechend dem zu messenden Weg veränderlichen elektrischen Widerstand (Potentiometer) aufweist, d. h. eine Veränderung der Position eines Teils des Wegaufnehmers relativ zu einem anderen Teil verändert einen elektrischen Widerstand und die Veränderung oder der Wert des Widerstands wird gemessen. Auch so genannte Resolver (Winkelgeber) könnten als Sensoren eingesetzt werden. Alternativ könnte der Wegaufnehmer **z.**B. ein induktiver Wegaufnehmer sein, d.h. die Induktivität einer Spule oder Spuleanordnung des Sensors verändert sich abhängig von dem zu messenden Weg. Z. B. ist ein Teil des Wegaufnehmers mit einem Spulenkern verbunden und ist dieser Teil mit dem pulenkern relativ zu einem anderen Teil, der mit den Windungen der Spule verbunden ist, beweglich. Solche Wegaufnehmer sind z. B. als linear variable Differential- Transformatoren (LVDT) bekannt.

Zum Beispiel können ein oder zwei Stromabnehmerpole des Fahrzeugs dazu genutzt werden, einen Wegaufnehmer (das heißt einen Wegsensor) anzubringen. Dieser zumindest eine Wegaufnehmer liefert beim Betrieb Signale, aus denen die Auslenkung des zugeordneten Stromabnehmerpols in Bezug auf das Fahrzeug bestimmt wird. Jeder Stromabnehmerpol (darunter wird insbesondere ein elektrischer Kontakt undloder eine elektrische Leitung zur Übertragung von Strom aus der entlang dem Fahrweg verlegten Stromleitung verstanden) kann, je nach mechanischer Ausgestaltung, das heißt je nach den Freiheitsgraden der Bewegung des Stromabnehmers relativ zum Fahrzeug, mit nicht nur einem Sensor, sondern auch mit mehr als einem Sensor kombiniert werden. Zum Beispiel können Sensoren Signale liefern, aus denen ein in Bezug auf den Stromabnehmer und das Fahrzeug oder in Bezug auf den Stromabnehmer und die Stromleitung definierter Winkel bestimmt werden kann. Alternativ kann die von dem Stromabnehmerpol zurückgelegte Strecke aus den Sensorsignalen bestimmt werden. Insbesondere können sich die von den Sensoren oder dem Sensor gelieferten Messsignale auf den Wagenkasten des Fahrzeugs beziehen oder durch Auswertung der Sensorsignale gezogen werden.

Aus den Sensorsignalen, die kontinuierlich, quasi kontinuierlich und zumindest wiederholt erzeugt und ausgewertet werden, kann eine Stellgröße erzeugt werden, die einer Lenksteuerung des Fahrzeugs zugeführt wird. Zum Beispiel kann die Lenksteuerung die Stellgröße mit einer Vergleichsgröße vergleichen, die sich aus einer vorgegebenen und zum Beispiel in der Lenksteuerung gespeicherten Streckeninformation über den Fahrstreckenverlauf des Fahrzeugs ermitteln lässt. Die Differenz zwischen Stellgröße und Vergleichsgröße kann dann dazu benutzt werden (zum Beispiel nach Verstärkung des Differenzsignals), ein Steuerungssignal zu erzeugen, mit dem das Lenksystem des Fahrzeugs beeinflusst oder gesteuert wird. Wie bereits oben erwähnt, kann auch ein Fahrzeugführer oder ein weiteres System mitbestimmend für den Betrieb der Lenkung sein. Zumindest der zusätzliche Einfluss auf die Lenkung, der sich aus dem oder den Sensoren ergibt, wird jedoch automatisch bestimmt. Ob der Lenkvorgang des Fahrzeugs auch automatisch beeinflusst oder vollständig gesteuert wird, hängt von der Ausführungsform des Spurführungssystems ab. Es ist sowohl eine automatische Spurführung ohne jeglichen Einfluss eines Fahrers möglich, alternativ eine teilweise automatische Beeinflussung des Lenkvorgangs und gleichzeitig eine Beeinflussung des Lenkvorganges durch einen Fahrer, als auch eine lediglich automatische Bestimmung einer Information für einen Fahrer oder ein anderes System, welches in die Lenkung eingreift, wobei die Information von dem Fahrer oder dem weiteren System auch unberücksichtigt bleiben kann. Zum Beispiel kann als Information lediglich eine Warnung an den Fahrer ausgegeben werden, dass das Fahrzeug dabei ist, die vorgegebene Fahrspur zu verlassen oder die Fahrspur bereits verlassen hat.

Wie teilweise bereits erwähnt wurde, kann es sich bei dem Stromabnehmer um unterschiedliche Konstruktionen handeln. Insbesondere kann ein Teil oder Bereich des Stromabnehmers an dem Fahrzeug befestigt sein, sodass jedoch ein anderer Teil oder Bereich des Stromabnehmers, der bei Betrieb des Fahrzeugs in elektrischem Kontakt zu der Stromleitung ist, relativ zu dem Fahrzeug beweglich ist. In diesem Fall wird vorzugsweise zumindest ein Positions- und/oder Wegsensor mit dem beweglichen Teil oder Bereich des Stromabnehmers kombiniert, um die Position, den Weg oder die Bewegung dieses Teils oder Bereichs zu messen.

Zu dem erfindungsgemäßen Spurführungssystem kann insbesondere auch die entlang der vorgegebenen Fahrspur verlaufende Stromleitung gehören, welche zum Beispiel ein oder zwei oder auch mehrere elektrische Potentiale führen kann, zum Beispiel die drei Phasen eines Drehstromsystems.

Ferner gehört zum Umfang ein Fahrzeug, zum Beispiel ein Trolleybus für den öffentlichen Personenverkehr, wobei das Fahrzeug den Stromabnehmer, den Positions- und/oder Wegsensor und die mit dem Sensor verbundene Lenksteuerung in einer der hier beschriebenen Ausgestaltungen aufweist.

Zusammenfassend hat die Erfindung folgende Vorteile: Da weitgehend vorhandene Komponenten wie die entlang der Fahrspur verlegte Stromleitung und der relativ zum Fahrzeug bewegliche Stromabnehmer für die Spurführung genutzt werden, sind die Kosten für die Realisierung des Spurführungssystems gering. Insbesondere dann, wenn mit Hilfe von Sensoren, die am Stromabnehmer angebracht sind, und optional unter Verwendung lediglich der im Fahrzeug vorhandenen Systeme die Spurführung realisiert wird, ist für die äußere Infrastruktur, das heißt für die Stromleitung, kein zusätzlicher Investitionsaufwand erforderlich.

Das Spurführungssystem ist sehr weitgehend unabhängig von den Witterungsbedingungen der Fahrt des Fahrzeugs. Es muss lediglich sichergestellt werden, dass die von dem oder den Sensoren gelieferten Signale unabhängig von den Witterungsbedingungen geliefert werden.

Das Spurführungssystem ist unabhängig von Einflussgrößen, insbesondere von Führungsgrößen der Lenksteuerung, die zu dem Fahrzeug übertragen werden müssen und daher gestört sein können.

Bei entsprechend präziser Anordnung, Ausgestaltung und Verarbeitung der Sensorsignale kann ein hochgenaues Spurführungssystem realisiert werden.

Auf Grund des in der Regel kontinuierlichen Kontakts zwischen der Stromleitung und dem Stromabnehmer kann auf einfache Weise eine kontinuierliche und daher zuverlässige und hochqualitative Spurführung erzielt werden.

Ausführungsbeispiele der Erfindung werden nun unter Bezugnahme auf die beigefügte Zeichnung beschrieben. Die einzelnen Figuren der Zeichnung zeigen:
- Fig. 1: schematisch eine perspektivische Darstellung eines Trolleybusses auf einer vorgegebenen Fahrspur,
- Fig. 2: eine Seitenansicht auf den Trolleybus gemäß Fig. 1,
- Fig. 3: eine Draufsicht auf den Trolleybus, wobei der Bus genau unterhalb der Oberleitung fährt,
- Fig. 4: eine weitere Draufsicht auf den Trolleybus, wobei der Bus lateral versetzt zu der Oberleitung fährt, und
- Fig. 5: eine schematische Darstellung von Einrichtungen eines Spurführungssystems zur Führung eines Fahrzeugs auf einer vorgegebenen Fahrspur.

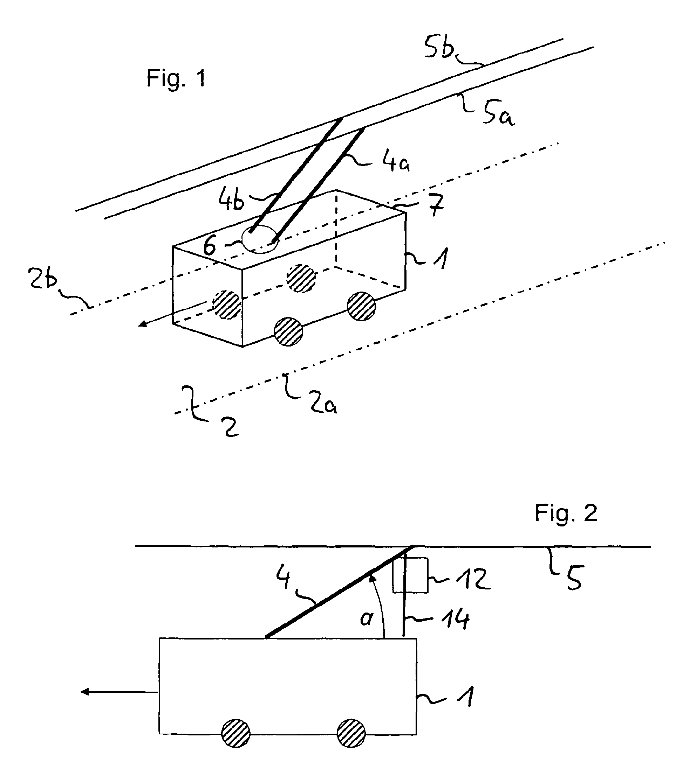

Aus Fig. 1 ist ein Trolleybus 1 erkennbar, der (wie durch einen nach links unten weisenden Pfeil angedeutet ist) nach links auf einer Fahrspur 2 fährt. Randlinien der Fahrspur 2 sind durch strichpunktierte Linien angedeutet, die mit den Bezugszeichen 2a, 2b bezeichnet sind.

Zur Führung des Busses 1 auf der Fahrspur 2 sind keinerlei Schienen mit dem Untergrund verbunden. Vielmehr kann der Bus 1 zum Beispiel auf einer Straße fahren, die auch von anderen Fahrzeugen mit anderer Spurweite befahren werden kann. Auch sind keine Spurführungssysteme vorhanden, bei denen die Spurführungsinformation von fahrzeugexternen Einrichtungen zu dem Fahrzeug übertragen wird.

Der Bus 1 weist an seinem Dach 7 eine drehbare Einrichtung 6 mit zwei Stromabnehmerpolen 4a, 4b auf, wobei die drehbare Einrichtung 6 ein Stromabnehmer ist, der bei dem Ausführungsbeispiel um eine senkrechte Drehachse verdrehbar ist, so dass die Stromabnehmerpole 4a, 4b verschiedene laterale Relativpositionen des Busses 1 und der oberhalb des Busses 1 verlaufenden Oberleitung 5a, 5b ermöglicht. Jeder der Stromabnehmerpole 4a, 4b ist mit einer Phase, einem Nullleiter oder Erdpotential der Oberleitung 5a, 5b in Kontakt, um für den Fahrantrieb (nicht dargestellt) des Busses 1 elektrische Energie bereit zu stellen.

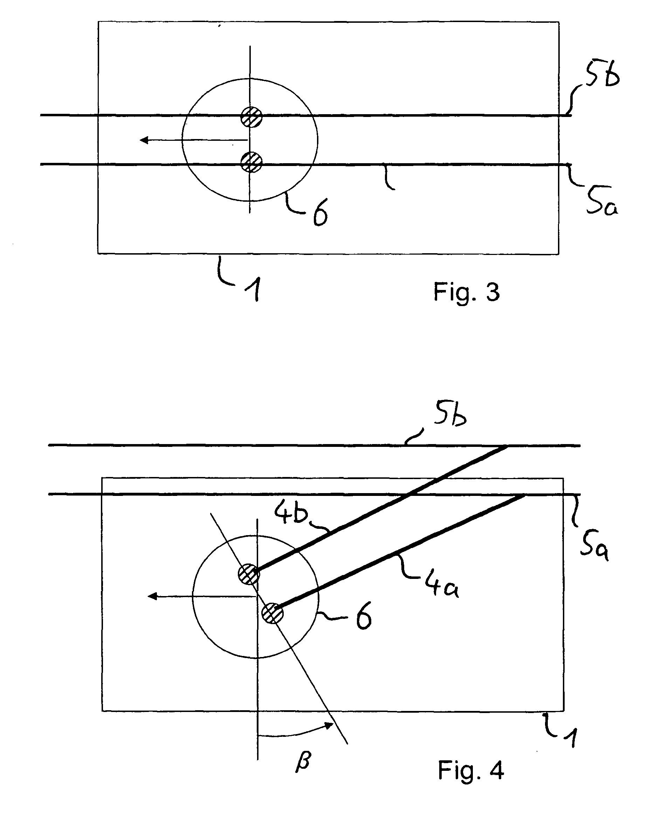

Wie in Fig. 3 von oben dargestellt ist, fährt der Bus 1 genau unterhalb der Oberleitung 5a, 5b. Daher ist der Stromabnehmer 6 relativ zu dem Wagenkasten des Busses 1 in einer Drehposition um die vertikale Drehachse, welche als nicht verdrehte Drehposition oder als Nullstellung bezeichnet werden kann.

Würde der Bus 1 dagegen im Unterschied zu der in Fig. 1 dargestellten Situation in Fahrtrichtung gesehen weiter links fahren, das heißt, in Fig. 1 weiter vorn im Bild fahren, würde der Stromabnehmer 6 gegenüber der Nullstellung um einen Winkel β verdreht, damit die Stromabnehmerpole 4a, 4b weiter in Kontakt zu den Leitern 5a, 5b der Oberleitung sein können. Diese Situation ist von oben in Fig. 4 dargestellt.

Bei einer bevorzugten Ausgestaltung der Erfindung wird nicht nur der Drehwinkel β (Fig. 4) durch einen zum Beispiel an einer Drehachse unterhalb des Stromabnehmers 6 zwischen diesem und dem Wagendach angeordneten Drehwinkelsensor gemessen, sondern außerdem auch der Winkel, mit dem zumindest einer der Stromabnehmerpole 4 relativ zu einer in Bezug auf das Wagendach definierten Ebene nach oben ansteigt, um die Oberleitung 5 oberhalb des Busses 1 kontaktieren zu können. Dieser Winkel ist in Fig. 2 mit α bezeichnet.

Alternativ oder zusätzlich zu dem erwähnten Drehwinkelsensor kann im Bereich des oberen Endes zumindest eines der Stromabnehmerpole 4 ein Positionssensor 12 befestigt sein. Unter Auswertung der Signale dieses Positionssensors 12 kann die Relativposition zwischen dem Sensor 12 und dem Wagenkasten des Busses 1 bestimmt werden. Zum Beispiel kann der Sensor 12 lediglich dazu dienen, den Winkel α oder den Abstand zwischen dem oberen Ende des Stromabnehmerpols 4 und dem Dach des Busses 1 zu bestimmen. In diesem Fall kann der Sensor 12 zum Beispiel eine Auslenkung einer nach oben auslenkbaren Halteeinrichtung 14 (siehe Fig. 2) messen, die den Stromabnehmerpol 4 an dessen oberen Ende hält.

Bei einer Ausführungsform gemäß den Ansprüchen ist der Sensor 12 ein Beschleunigungssensor. Durch zweifache zeitliche Integration der von dem Sensor 12 gelieferten Signale kann wiederholt jeweils bezogen auf einen in der Vergangenheit liegenden Zeitpunkt der seit dem von dem Sensor 12 und damit auch von dem oberen Bereich des Stromabnehmerpols 4 zurückgelegte Weg bestimmt werden. Daraus lässt sich nicht nur der Neigungswinkel α (siehe Fig. 2), sondern auch der Drehwinkel β (siehe Fig. 4) bestimmen.

Beschleunigungssensoren, insbesondere IMUs, haben gegenüber konventionellen Drehwinkelsensoren den Vorteil, dass sie besonders kleine Abmessungen haben und auch kostengünstig sind. Außerdem müssen Beschleunigungssensoren nicht im Bereich des Drehgelenks angeordnet werden. Vielmehr kann der Beschleunigungssensor an einer beliebigen Stelle des Stromabnehmers angeordnet werden. Im Unterschied zu den Messsignalen von konventionellen Drehwinkeisensoren können Messsignale von Beschleunigungssensoren Gegenstand einer wesentlich detaillierteren Auswertung sein. Zum Beispiel können auch die hohen Schwingungsamplituden unerwünschter ResonanzSchwingungen detektiert werden, die auf Dauer zur Beschädigung des Stromabnehmers oder anderer Teile führen könnten.

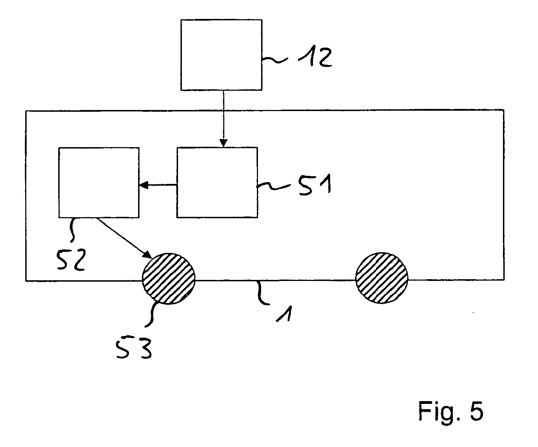

Ein Ausführungsbeispiel für die Verarbeitung der Sensorsignale, zum Beispiel der Sensorsignale des Sensors 12 und/oder des Drehwinkelgebers, wird nun anhand von Fig. 5 beschrieben. Die Figur zeigt schematisch ein spurgeführtes Fahrzeug, zum Beispiel den Bus 1 gemäß Fig. 1 - Fig. 4. Der oder die Sensoren sind pauschal durch ein Rechteck mit dem Bezugszeichen 12 bezeichnet. Der oder die Sensoren 12 sind über eine oder mehrere Signalleitungen zur Übertragung der Sensorsignale mit einer Auswertungseinrichtung 51 verbunden. Die Auswertungseinrichtung 51 berechnet aus den Sensorsignalen wiederholt eine Stellgröße, die sie mit einer Vergleichsgröße vergleicht. Zum Beispiel ist die Stellgröße die Relativposition des Fahrzeugs 1 auf einer Fahrspur 2 in lateraler Richtung. Die Vergleichsgröße ist die Soll-Position des Fahrzeugs in lateraler Richtung auf der Fahrspur. Zum Beispiel ist die Vergleichsgröße für jede Position des Fahrzeugs in Fahrtrichtung auf der Fahrspur definiert. Die Auswertungseinrichtung 51 kann zum Beispiel vom Wegmesssystem des Fahrzeugs 1 die Information darüber erhalten, an welcher Position in Fahrtrichtung sich das Fahrzeug auf der Fahrspur 2 befindet. Diese Information kann jedoch auch auf andere Weise gewonnen werden. Zum Beispiel kann das Fahrzeug einen weiteren Beschleunigungssensor aufweisen, der fest am Wagenkasten angebracht ist. Durch zweifache zeitliche Integration der Signale dieses Sensors kann die absolute Position oder der zurückgelegte Weg des Fahrzeugs berechnet werden.

Durch Vergleich der Stellgröße und der Vergleichsgröße berechnet die Auswertungseinrichtung 51 ein Steuersignal, das über eine entsprechende Signalleitung an das Lenksystem 52 des Fahrzeugs ausgegeben wird. Bei einer bevorzugten Ausgestaltung greift das Lenksystem 52 abhängig von diesem Steuersignal automatisch in die Lenkung der Räder (zum Beispiel der Vorderräder 53 des Fahrzeugs 1) ein. Der Eingriff kann laufend erfolgen oder nur unter bestimmten Bedingungen (zum Beispiel wenn der Fahrer des Fahrzeugs 1 seit einem Zeitraum vordefinierter Länge nicht einen Signalmechanismus betätigt hat, so genannte Watchdog-Schaltung. Der Eingriff der Lenksteuerung 52 kann jedoch alternativ nur dann stattfinden, wenn das Fahrzeug 1 dabei ist, die Fahrspur 2 zu verlassen oder bereits verlassen hat. Wiederum alternativ oder zusätzlich kann die Einrichtung 52 den Fahrer des Fahrzeugs 1 lediglich warnen, wenn das Fahrzeug 1 dabei ist, die Fahrspur zu verlassen oder diese bereits verlassen hat.

## Patentansprüche

1. Spurführungssystem zur Führung eines Fahrzeugs (1) auf einer vorgegebenen Fahrspur (2), insbesondere zur Führung eines Trolleybusses für den öffentlichen Personenverkehr, wobei das Fahrzeug (1) einen Stromabnehmer (4, 6) aufweist, der relativ zu dem Fahrzeug beweglich ist und der dazu ausgestaltet ist, elektrische Energie aus einer Stromleitung (5), die entlang der vorgegebenen Fahrspur (2) verläuft, für einen Antrieb und/oder für Hilfsbetriebe des Fahrzeugs (1) bereitzustellen,
wobei
- das System einen Positions- und/oder Wegsensor (12) aufweist, der derart mit dem Fahrzeug (1) und/oder mit dem Stromabnehmer (4, 6) kombiniert ist, dass der Sensor (12) wiederholt eine Relativposition und/oder einen relativ zwischen dem Stromabnehmer (4, 6) und dem Fahrzeug zurückgelegten Weg detektiert und ein entsprechendes Detektionssignal erzeugt,
- der Sensor (12) mit einer Lenksteuerung (52) verbunden ist, die ausgestaltet ist, die Detektionssignale zu empfangen und das Fahrzeug (1) abhängig von den Detektionssignalen so zu lenken, dass das Fahrzeug (1) auf der vorgegebenen Fahrspur (2) fährt.
**dadurch gekennzeichnet, dass**
- der Sensor (12) ein Beschleunigungssensor ist, wobei der Sensor (12) und/oder eine mit dem Sensor (12) kombinierte Auswertungseinrichtung (51) ausgestaltet ist, von dem Sensor (12) erzeugte Beschleunigungssignale über die Zeit zu integrieren, um die relative Geschwindigkeit des Stromabnehmers (4, 6) und des Fahrzeugs (1) und/oder den relativ zwischen dem Stromabnehmer (4, 6) und dem Fahrzeug (1) zurückgelegten Weg zu bestimmen.

2. Spurführungssystem nach dem vorhergehenden Anspruch, wobei der Sensor (12) ein elektrischer und/oder pneumatischer Sensor ist.

3. Spurführungssystem nach einem der vorhergehenden Ansprüche, wobei ein Teil oder Bereich des Stromabnehmers (4, 6) an dem Fahrzeug (1) befestigt ist, sodass jedoch ein anderer Teil oder Bereich des Stromabnehmers (4, 6), der beim Betrieb des Fahrzeugs (1) in elektrischen Kontakt zu der Stromleitung ist, relativ zu dem Fahrzeug (1) beweglich ist.

4. Spurführungssystem nach einem der vorhergehenden Ansprüche, wobei das Spurführungssystem ferner die entlang der vorgegebenen Fahrspur verlaufende Stromleitung (5) aufweist.

5. Fahrzeug (1), insbesondere Trolleybus für den öffentlichen Personenverkehr, wobei das Fahrzeug (1) den Stromabnehmer (4, 6), den Positions- und/oder Wegsensor (12) und die mit dem Sensor (12) verbundene Lenksteuerung (52) nach einem der vorhergehenden Ansprüche aufweist.

6. Verfahren zur Führung eines Fahrzeugs (1) auf einer vorgegebenen Fahrspur (2), insbesondere zur Führung eines Trolleybusses für den öffentlichen Personenverkehr, wobei ein Stromabnehmer (4, 6) des Fahrzeugs (1) elektrische Energie aus einer Stromleitung (5), die entlang der vorgegebenen Fahrspur (2) verläuft, für einen Antrieb und/oder für Hilfsbetriebe des Fahrzeugs (1) bereitstellt und wobei der Stromabnehmer (4,6) sich entsprechend der Fahrt des Fahrzeugs (1) und entsprechend dem Verlauf der Stromleitung (5) relativ zu dem Fahrzeug (1) bewegt,
wobei
- wiederholt eine Relativbewegung und/oder eine Relativposition des Fahrzeugs (1) und eines Stromabnehmers (4, 6) gemessen wird/werden und
- das Fahrzeug (1) abhängig von Messwerten der Messung so gelenkt wird, dass das Fahrzeug (1) auf der vorgegebenen Fahrspur (2) fährt.
**dadurch gekennzeichnet, dass**
- wiederholt eine Beschleunigung des Stromabnehmers (4, 6) gemessen wird und die Beschleunigung über die Zeit integriert wird, um die relative Geschwindigkeit des Stromabnehmers (4, 6) und des Fahrzeugs (1) und/oder den relativ zwischen dem Stromabnehmer (4, 6) und dem Fahrzeug (1) zurückgelegten Weg zu bestimmen.

7. Verfahren nach dem vorhergehenden Anspruch, wobei die Messung von einem elektrischen und/oder pneumatischen Sensor (12) durchgeführt wird.

## Claims

1. A guidance system for guiding a vehicle (1) along a predefined traffic lane (2), in particular for guiding a trolleybus for public passenger transport, the vehicle (1) comprising a current collector (4, 6) which is movable relative to the vehicle and is designed to supply electrical energy from a power line (5), which extends along the predefined traffic lane (2), for a drive and/or for auxiliary operations of the vehicle (1),
- the system comprising a position and/or path sensor (12) which is combined with the vehicle (1) and/or with the current collector (4, 6) in such a way that the sensor (12) repeatedly detects a relative position and/or a path covered relatively between the current collector (4, 6) and the vehicle and generates a corresponding detection signal,
- the sensor (12) being connected to a steering control (52) which is designed to receive the detection signals and to steer the vehicle (1) as a function of the detection signals so that the vehicle (1) travels along the predefined traffic lane (2),
**characterised in that**
- the sensor (12) is an acceleration sensor, the sensor (12) and/or an evaluation means (51) combined with the sensor (12) being designed to integrate acceleration signals generated by the sensor (12) over time so as to determine the relative speed of the current collector (4, 6) and of the vehicle (1) and/or the path covered relatively between the current collector (4, 6) and the vehicle (1).

2. The guidance system according to the preceding claim, wherein the sensor (12) is an electric and/or pneumatic sensor.

3. The guidance system according to any one of the preceding claims, wherein a part or area of the current collector (4, 6) is fastened to the vehicle (1) in such a way that another part or area of the current collector (4, 6), which is in electrical contact with the power line during operation of the vehicle (1), is movable relative to the vehicle (1).

4. The guidance system according to any one of the preceding claims, wherein the guidance system further comprises the power line (5) extending along the predefined traffic lane.

5. A vehicle (1), in particular a trolleybus for public passenger transport, wherein the vehicle (1) comprises the current collector (4, 6), the position and/or path sensor (12) and the steering control (52) connected to the sensor (12) according to any one of the preceding claims.

6. A method for guiding a vehicle (1) along a predefined traffic lane (2), in particular for guiding a trolleybus for public passenger transport, a current collector (4, 6) of the vehicle (1) supplying electrical energy from a power line (5), which extends along the predefined traffic lane (2), for a drive and/or for auxiliary operations of the vehicle (1), and the current collector (4, 6) moving relative to the vehicle (1) in accordance with the journey of the vehicle (1) and in accordance with the course of the power line (5),
- a relative movement and/or a relative position of the vehicle (1) and of a current collector (4, 6) being measured repeatedly and
- the vehicle (1) being steered as a function of measured values of the measurement in such a way that the vehicle (1) travels along the predefined traffic lane (2),
**characterised in that**
- an acceleration of the current collector (4, 6) is measured repeatedly and the acceleration over time is integrated so as to determine the relative speed of the current collector (4, 6) and of the vehicle (1) and/or the path covered relatively between the current collector (4, 6) and the vehicle (1).

7. The method according to the preceding claim, wherein the measurement is taken by an electric and/or pneumatic sensor (12).

## Revendications

1. Système de guidage de voie pour le guidage d'un véhicule (1) sur une voie de circulation prescrite (2), en particulier pour le guidage d'un trolleybus pour le transport public de voyageurs, sachant que le véhicule (1) présente un trolley (4, 6) qui est mobile par rapport à celui-ci et qui est configuré de sorte à mettre à disposition de l'énergie électrique à partir d'un fil de courant (5) qui s'étend le long de la voie de circulation (2) prescrite, pour un entraînement et/ou des services auxiliaires du véhicule (1), sachant que
- le système présente un capteur de position et/ou de déplacement (12) qui est combiné au véhicule (1) et/ou au trolley (4, 6) de telle manière que le capteur (12) détecte de manière répétée une position relative et/ou une course parcourue de manière relative entre le trolley (4, 6) et le véhicule et génère un signal de détection correspondant,
- le capteur (12) est relié à une commande de direction (52) qui est configurée afin de recevoir les signaux de détection et de diriger le véhicule (1) en fonction des signaux de détection de sorte que le véhicule (1) se déplace sur la voie de circulation (2) prescrite, **caractérisé en ce que**
- le capteur (12) est un capteur d'accélération, sachant que le capteur (12) et/ou un dispositif d'évaluation (51) combiné au capteur (12) est configuré de sorte à intégrer des signaux d'accélération générés par le capteur (12) sur la durée afin de déterminer la vitesse relative du trolley (4, 6) et du véhicule (1) et/ou la course parcourue de manière relative entre le trolley (4, 6) et le véhicule (1).

2. Système de guidage de voie selon la revendication précédente, sachant que le capteur (12) est un capteur électrique et/ou pneumatique.

3. Système de guidage de voie selon la revendication précédente, sachant qu'une partie ou zone du trolley (4, 6) est fixée sur le véhicule (1) de sorte qu'une autre partie ou zone du trolley (4, 6) qui est en contact électrique avec le fil de courant lors du fonctionnement du véhicule (1), soit mobile par rapport au véhicule (1).

4. Système de guidage de voie selon l'une quelconque des revendications précédentes, sachant que le système de guidage de voie présente de plus le fil de courant (5) s'étendant le long de la voie de circulation prescrite.

5. Véhicule (1), en particulier trolleybus pour le transport public de voyageurs, sachant que le véhicule (1) présente le trolley (4, 6), le capteur de position et/ou de déplacement (12) et la commande de direction (52) reliée au capteur (12) selon l'une quelconque des revendications précédentes.

6. Procédé de guidage d'un véhicule (1) sur une voie de circulation (2) prescrite, en particulier pour le guidage d'un trolleybus pour le transport public de voyageurs, sachant qu'un trolley (4, 6) du véhicule (1) met à disposition de l'énergie électrique depuis un fil de courant (5) qui s'étend le long de la voie de circulation (2) prescrite, pour un entraînement et/ou pour des services auxiliaires du véhicule (1) et sachant que le trolley (4, 6) se déplace selon la course du véhicule (1) et selon le développement du fil de courant (5) par rapport au véhicule (1), sachant que
- un mouvement relatif et/ou une position relative du véhicule (1) et d'un trolley (4, 6) est/sont mesurés de manière répétée et
- le véhicule (1) est dirigé en fonction des valeurs de la mesure de sorte que le véhicule (1) se déplace sur la voie de circulation (2) prescrite,
**caractérisé en ce que**
- une accélération du trolley (4, 6) est mesurée de manière répétée et l'accélération est intégrée sur la durée afin de déterminer la vitesse relative du trolley (4, 6) et du véhicule (1) et/ou la course parcourue de manière relative entre le trolley (4, 6) et le véhicule (1).

7. Procédé selon la revendication précédente, sachant que la mesure est réalisée par un capteur électrique et/ou pneumatique (12).
